# EUROPEAN PATENT APPLICATION

(11) **EP 1 669 643 A1**
(43) Date of publication of application: **14.06.2006**
(21) Application number: 04705153.7
(22) Date of filing: 26.01.2004
(51) Int. Cl.: F16H 61/28, F16H 63/20

(54) **MOTOR DRIVEN TRANSMISSION OPERATING UNIT**

(30) Priority: 03.10.2003 JP 2003345843
(71) Applicant: Bosch Corporation, Shibuya-ku Tokyo 150-8360 (JP)
(72) Inventor: Kawamura, Atsushi, Bosch Automotive Systems Corp., Saitama 355-8603 (JP)
(74) Representative: HOFFMANN EITLE
(86) International application number: PCT/JP2004/000659
(87) International publication number: WO 2005/033556

(57) **Abstract**

The present invention aims at the enhancement of the mountability of a motor-driven-type transmission manipulating device on a vehicle by lowering a height of a transmission 21 of the manipulating device from a mounting surface A for a transmission 21.

On an outer periphery of a shift shaft 4 which is rotatably supported in the inside of a housing 2, a striker 6 is fitted movably in the axial direction while preventing the relative rotation. A ball nut 26 is fitted on a ball screw 20 which is arranged parallel to the shift shaft 4, and a projection 6b of the striker 6 is engaged with a groove 26a formed in the ball nut 26. A slide block 38 is supported on two guide rods 36 which are arranged parallel to the shift shaft 4, and a projection 6b of the above-mentioned striker 6 is engaged with a groove 38a formed in the slide block 38. Along with the movement of the striker 6 in the axial direction, the block 38 is moved and a select sensor 40 detects a selected position of the striker 6 by way of a position of the block 38. The shift shaft 4 and the ball screw 20 are arranged in a plane parallel to a mounting surface A for a transmission 21.

## Description

### TECHNICAL FIELD

The present invention relates to a transmission manipulating device, and more particularly to a motor-driven-type transmission manipulating device which performs a selecting operation and a shifting operation of a transmission by moving or rotating a striker due to the driving of the motor.

### BACKGROUND ART

A motor-driven-type transmission manipulating device includes a shift shaft which is rotatably supported in the inside of a housing, a striker which is fitted on an outer periphery of the shift shaft, a selecting motor which allows the striker to move in the axial direction of the shift shaft, and a shifting motor which allows the striker to be rotated about an axis of the shift shaft, wherein the motor-driven-type transmission manipulating device performs the selecting operation and the shifting operation by controlling the operations of these selecting motor and shifting motor.

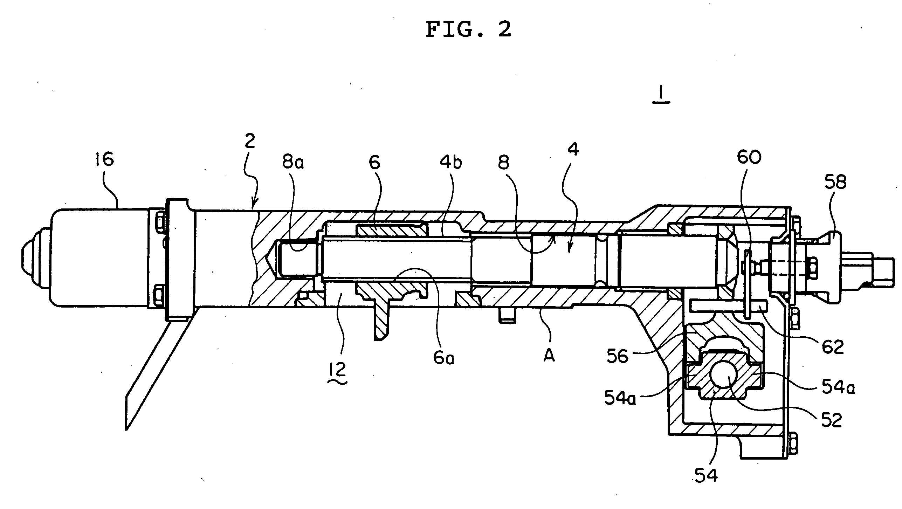

One example of the motor-driven-type transmission manipulating device (patent publication No. 2992697 (see page 4 to 6, Fig. 2), hereinafter referred to as patent document 1) is briefly explained. In the motor-driven-type transmission manipulating device described in the above mentioned patent document 1 (referred to as an electrically operated X-Y shifting mechanism in the patent document 1), in the inside of the housing (referred to as a shifting mechanism housing 30 in patent document 1, hereinafter referred to in a same manner), a shift shaft (a first shaft member 42) and a motor shaft (a second shaft member 46) of a selecting motor (a motor 36) are arranged parallel to each other, a striker (a bearing 44 and a shift finger 20) is axially movably fitted on an outer periphery of the shift shaft, while a nut (a transverse member 48) is threadedly mounted on a threaded portion which is formed on an outer periphery of the motor shaft. An engaging projection (a shoulder 50) is formed on the striker, and, at the same time, a groove (an arcuate groove 51) with which the projection is engaged is formed in the nut. By engaging the projection with the groove, and by moving the nut in the axial direction along the motor shaft due to the driving of the selecting motor, the striker is moved in the axial direction along the shift shaft, thus performing the selecting operation of the transmission.

In the constitution of the invention described in patent document 1, the shift shaft (the first shaft member 42) and the shaft of the selecting motor (the second shaft member 46) are arranged such that these shafts are vertically overlapped to each other with respect to a mounting surface for the transmission (a shift rail housing 32) of the housing of the electrically operated X-Y shifting mechanism, that is, these shafts are disposed parallel to each other in a plane substantially perpendicular to the mounting surface.

In the above mentioned conventional constitution, a height of the motor-driven-type transmission manipulating device from the mounting surface to the transmission is increased and hence, there arises a drawback that a kind of vehicle on which the motor-driven-type transmission manipulating device can be mounted is limited.

The present invention has been made to overcome the above mentioned drawback and it is an object of the present invention to provide a motor-driven-type transmission manipulating device in a compact shape thus enabling the mounting of the transmission manipulating device on various vehicles.

### DISCLOSURE OF THE INVENTION

The invention described in claim 1 is directed to a motor-driven-type transmission manipulating device which includes a shift shaft which is rotatably supported in the inside of a housing, a striker which is fitted on the shift shaft movably in the axial direction in the shift shaft, a screw shaft which is arranged parallel to the shift shaft and is rotated by the driving of a selecting motor, and a connecting member which is threadedly mounted on the screw shaft and is engaged with the striker so as to be integrally movable with the striker in the axial direction, wherein by moving the connecting member in the axial direction by rotating the screw shaft due to the driving of the selecting motor, the striker is moved in the axial direction so as to perform the selecting operation of a transmission, wherein the improvement is characterized in that the shift shaft and the screw shaft are arranged in a plane parallel to a mounting surface for the transmission of the housing.

According to the present invention, by minimizing a height of the motor-driven-type transmission manipulating device from the mounting surface to the transmission, it is possible to enhance the mountability of the transmission manipulating device on the vehicle.

Further, according to the invention described in claim 2, the shift shaft and the striker are engaged with each other by the spline engagement.

Still further, according to the invention described in claim 3, the screw shaft which is rotated by the selecting motor is a ball screw and the connecting member is a ball nut.

Further, according to the invention described in claim 4, a plurality of guide rods are provided parallel to the shift shaft and the screw shaft on a side opposite to the screw shaft with the shift shaft sandwiched between the guide rods and the screw shaft, a slide block is axially movably supported on these guide rods and is connected with the striker, and a selecting position of the striker is detected by detecting an axial position of the slide block using a selecting sensor.

According to the invention described in claim 5, a flange-shaped projection is formed on an outer periphery of the striker, and the projection is engaged with grooves which are formed on outer surfaces of the connecting member and the slide block respectively whereby these connecting member, striker, and slide block are connected with each other so as to be integrally movable in the axial direction.

### BRIEF DESCRIPTION OF THE DRAWINGS

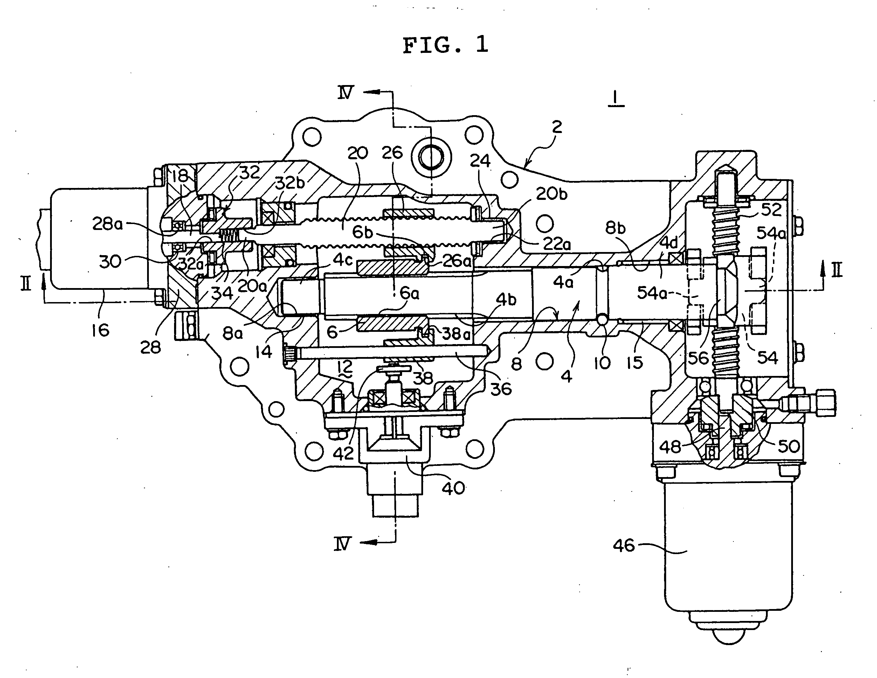

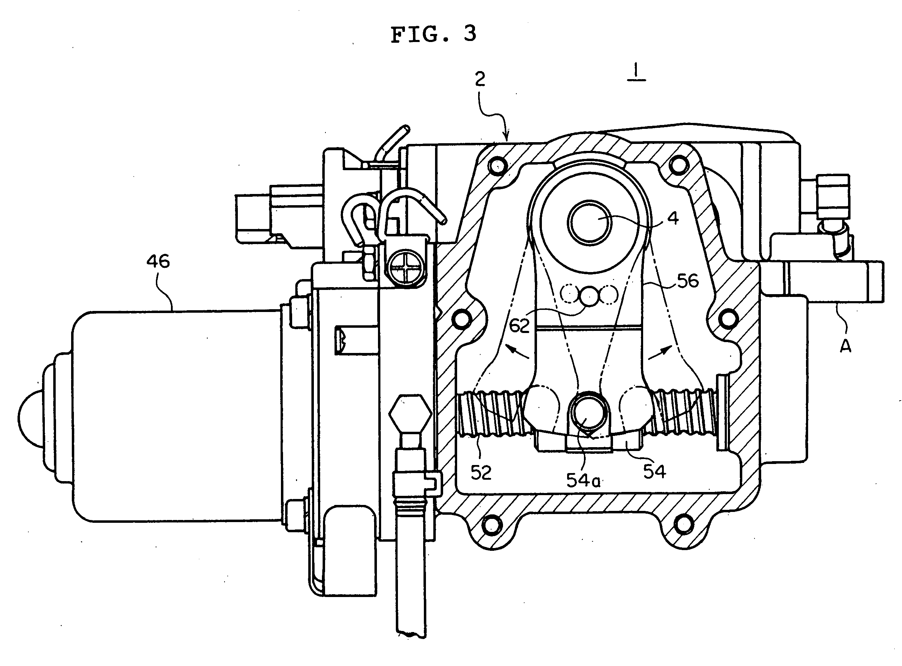

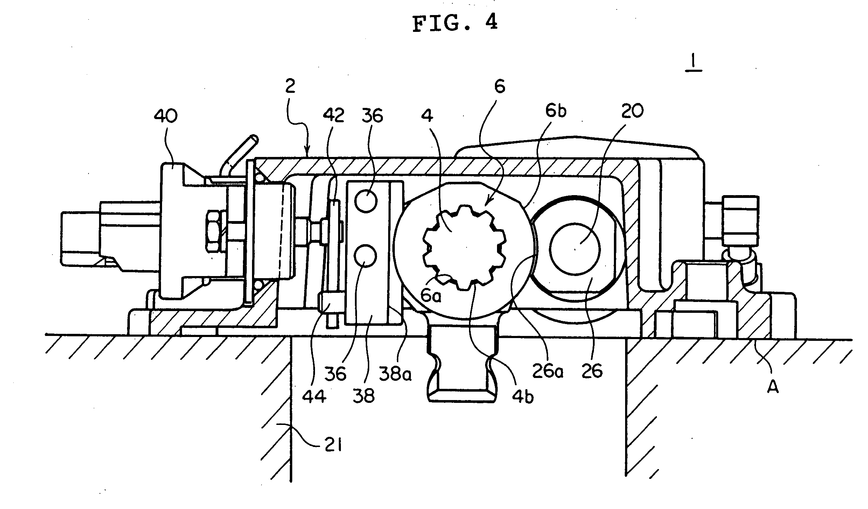

Fig. 1 is a cross-sectional view of a motor-driven-type transmission manipulating device according to one embodiment of the present invention taken along an axis of a shift shaft of the transmission manipulating device, Fig. 2 is a cross-sectional view taken along a line II-II in Fig. 1, Fig. 3 is a right side view with a portion of Fig. 1 in cross section, and Fig. 4 is a cross-sectional view taken along a line IV-IV in Fig. 1.

### BEST MODE FOR CARRYING OUT THE INVENTION

Hereinafter, the present invention is explained in conjunction with embodiments shown in drawings. In a motor-driven-type transmission manipulating device (the whole constitution being indicated by numeral 1), a shift shaft 4 is rotatably supported in the inside of a housing 2, and a striker 6 is fitted on an outer periphery of the shift shaft 4 in a state that the striker 6 is movable in the axial direction of the shift shaft 4. As will be explained later, the selecting operation of a transmission is performed by moving the striker 6 in the axial direction of the shift shaft 4, while the shifting operation of the transmission is performed by rotating the striker 6.

In the inside of the housing 2, a shift shaft holding hole 8 is formed and the shift shaft 4 is rotatably held in the holding hole 8. A U-shaped groove 4a is formed in an outer peripheral surface of the shift shaft 4, and a fixing pin 10 which is fixed to an inner surface of the above-mentioned holding hole 8 is fitted in the U-shaped groove 4a so as to restrict the movement of the shift shaft 4 in the axial direction while allowing the rotation of the shift shaft 4 about an axis thereof. Here, a means which restricts the movement of the shift shaft 4 in the axial direction is not limited to the above-mentioned pin 10, and the other means may be used.

On a side (left end in Fig. 1 and 2) close to one end portion 8a of the shift shaft holding hole 8 which is formed in the housing 2, a space 12 which surrounds the shift shaft 4 is formed, and the striker 6 is fitted on an outer periphery of a portion of the shift shaft 4 which is positioned in the inside of the space 12. Spline grooves 4b which extend in the axial direction are formed in an outer peripheral surface of a portion of the shift shaft 4 which is positioned in the space 12, while spline grooves 6a which extend in the axial direction are also formed in an inner peripheral surface of the striker 6, wherein these grooves 4b, 6a are engaged with each other, whereby the striker 6 is movable in the axial direction of the shift shaft 4 and, at the same time, is integrally rotatable with the shift shaft 4 in the rotational direction. Both end portions 4c, 4d of the shift shaft 4 are rotatably held by bearings 14, 15 which are arranged in both end portions 8a, 8b of the shift shaft holding hole 8.

A selecting motor 16 is mounted on the housing 2 and a ball screw 20 is connected to a motor shaft 18 of the selecting motor 16, wherein the ball screw 20 is rotated by the driving of the selecting motor 16. The ball screw 20 is arranged parallel to the shift shaft 4 in a plane parallel to a mounting surface A (see Fig. 2 or 4) at which the above-mentioned housing 2 is fixed to the transmission 21 (see Fig. 4) . A portion close to an end portion 20b of the ball screw 20 opposite to an end portion (left end in Fig. 1) 20a connected to the selecting motor 16 side extends into the space 12 which surrounds the shift shaft 4, and the distal end portion 20b is supported in the inside of a support hole 22a formed in the housing 2 by way of a bearing 24.

A ball nut (connecting member) 26 is threadedly mounted on a portion of the ball screw 20 which is positioned in the inside of the space 12. An engaging arcuate groove 26a (see Fig. 4) is formed in an outer surface of the ball nut 26, while a flange-shaped engaging projection 6b is formed on an outer surface of the striker 6, wherein the engaging projection 6b is engaged in the engaging groove 26a of the ball nut 26. Accordingly, upon the driving of the selecting motor 16, when the ball screw 20 which is connected to the motor shaft 18 is rotated, the ball nut 26 is moved on the ball screw 20 in the axial direction. In response to this movement of the ball nut 26, the striker 6 is moved on the shift shaft 4 in the axial direction and hence, the selecting operation of the transmission 21 is performed. Further, due to the engagement of the groove 26a of the ball nut 26 and the flange-shaped projection 6b of the striker 6, the rotation of the striker 6 is allowed.

Next, the constitution of a connecting portion between the above-mentioned ball screw 20 and the motor shaft 18 of the selecting motor 16 is explained. The selecting motor 16 is fixed to the housing 2 by way of a disc-like mounting plate 28 which is mounted on one end of the selecting motor 16, while the motor shaft 18 penetrates a ball bearing 30 which is arranged in the inside of a hole 28a formed in the center of a mounting plate 28 and extends into the inside of the housing 2. A rotation transmitting member 32 is connected to the motor shaft 18. A connecting hole 32a having a non-circular cross section (for example, D-shaped cross section) is formed in the selecting motor 16 side of the rotation transmitting member 32, and a distal end of the motor shaft 18 having a shape similar to the shape of the connecting hole 32a is fitted in the mounting hole 32a and transmits the rotation.

A shaft inserting hole 32b is formed in another end surface (right end surface in Fig. 1) of the rotation transmitting member 32, and the above-mentioned end portion 20a of the ball screw 20 is inserted into the inside of the shaft inserting hole 32b. An outer peripheral surface of the end portion 20a of the ball screw 20 and the above-mentioned shaft inserting hole 32b have a non-circular cross section in the same manner as the motor shaft 18 side so as to allow the transmission of the rotation as well as the movement of the ball screw 20 in the axial direction. A spring 34 for buffering is arranged between the distal end surface of the ball screw 20 and a stepped portion in the inside of the shaft inserting hole 32b.

In the inside of the above-mentioned space 12 in which the striker 6 which is fitted on the above-mentioned shift shaft 4 and the ball nut 26 which is threadedly mounted on the ball screw 20 and the like are housed, guide rods 36 are arranged parallel to the shift shaft 4 and the ball screw 20 on a side opposite to the ball screw 20 with the shift shaft 4 sandwiched between the guide rods 36 and the ball screw 20. Two guide rods 36 are arranged vertically as shown in Fig. 4 and a slide block 38 is slidably fitted on these two guide rods 36. The slide block 38 has the rotation thereof restricted by two upper and lower guide rods 36 and is movable in the same direction as an axis of the shift shaft 4.

An engaging groove 38a is formed in a shift shaft 4 side of the above-mentioned slide block 38, and the above-mentioned flange-shaped engaging projection 6b which is formed on an outer surface of the striker 6 is engaged in the groove 38a. Due to the engagement of the groove 38a of the slide block 38 and the engaging projection 6b of the striker 6, the slide block 38 and the striker 6 are integrally moved in the axial direction and, at the same time, the rotation of the striker 6 is allowed.

At a side of the space 12 in which the above-mentioned shift shaft 4, the ball screw 20 and the guide rod 38 are arranged in parallel in the housing 2, a rotational-angle-detection-type selecting sensor 40 is mounted to detect the selecting position of the striker 6. In the selecting sensor 40, a U-shaped groove is formed in a distal end of a detecting lever 42 and a pin 44 (see Fig. 4) which is mounted on a lower end of the above-mentioned slide block 38 is engaged with the U-shaped groove and hence, in response to a position of the slide block 38 which is moved along with the movement of the striker 6 on the shift shaft 4 in the axial direction, the selecting position of the striker 6 is detected.

The constitution which performs the shifting operation of the motor-driven-type transmission manipulation device 1 is explained. In the direction orthogonal to the shift shaft 4 of the housing 2, a shifting motor 46 is mounted with a height different from a height of the shift shaft 4. In this embodiment, the shifting motor 46 is arranged below a mounting surface A for the transmission 21 (see Fig. 3). A ball screw 52 is connected to a motor shaft 48 of the shifting motor 46 by way of a rotation transmitting member 50, and a ball nut (connecting member) 54 is threadedly mounted on the ball screw 52. Here, a connecting portion of the rotation transmitting member 50, the motor shaft 48 and the ball screw 52 transmits the rotation due to the combination of non-circular cross sections in the same manner as the connecting portion of the above-mentioned selecting motor 16.

A transmitting lever 56 is fixed to an end portion of the shift shaft 4 on a side opposite to the above-mentioned selecting motor 16, and a distal end (lower end) side of the transmitting lever 56 is engaged with a pair of engaging pins 54a mounted on both sides of the above-mentioned ball nut 54. Accordingly, when the shifting motor 46 is driven, the ball screw 52 is rotated by way of the motor shaft 48 and hence, the ball nut 54 is moved on the ball screw 52 in the axial direction. In response to the axial movement of the ball nut 54, the transmitting lever 56 is rotated. When the transmitting lever 56 is rotated, the shift shaft 4 and the striker 6 which is mounted on the shift shaft 4 by the spline engagement are integrally rotated. Accordingly, the shifting operation of the transmission 21 is performed.

At a side-surface side of the above-mentioned transmitting lever 56, a rotational-angle-detection-type shift sensor 58 (see Fig. 2, the sensor 58 being omitted in Fig. 1) which detects the shift position of the striker 6 is mounted on the housing 2. In the shift sensor 58, a U-shaped groove is formed in a distal end of a detecting lever 60 and the groove is engaged with an engaging pin 62 which is fixed to an intermediate portion of the above-mentioned transmitting lever 56. By detecting the tilting position of the transmitting lever 56 which is fixed to an end portion of the shift shaft 4 using the shift sensor 58, it is possible to detect the shifting position of the striker 6.

Hereinafter, the manner of operation of the motor-driven-type transmission manipulating device having the above-mentioned constitution is explained. When the motor shaft 18 is rotated by the driving of the selecting motor 16, the ball screw 20 which is connected to the motor shaft 18 by way of the rotation transmitting member 32 is rotated and the ball nut 26 is moved in the axial direction of the ball screw 20. When the ball nut 26 is moved, the striker 6 which is engaged with the ball nut 26 due to the engagement between the engaging groove 26a of the ball nut 26 and the flange-shaped engaging projection 6b is moved in the axial direction of the shift shaft 4, and a selecting operation of the transmission 21 is performed. Further, the slide block 38 which has the engaging groove 38a which is formed on an outer surface thereof engaged with the engaging projection 6b of the striker 6 is guided and moved in the axial direction by two guide rods 36.

The select sensor 40 is mounted on a slide-block-38-side side surface of the housing 2, and the engaging pin 44 which is fixed to the slide block 38 is connected to the detecting lever 42 of the select sensor 40. Accordingly, the moving position in the axial direction of the striker 6, that is, a selecting position of the transmission 21 is detected by the select sensor 40 by way of the movement of the slide block 38. Usually, a select sensor 40 of the conventional motor-driven-type transmission manipulating device detects a position of a nut which is threadedly mounted on a threaded shaft which is connected to a motor shaft of a selecting motor. However, the use of the nut generates a play between the nut and the threaded shaft and hence, the deviation is generated by an action of a rotational force whereby it is difficult to perform the highly accurate detection. In this embodiment, since the slide block 38 whose moving position is detected by the select sensor 40 is guided by two parallel guide rods 36, there is no possibility that the slide block 38 deviates. Accordingly, the slide block 38 moves in a stable posture and hence, it is possible to detect the select position with high accuracy.

Subsequently, the motor shaft 48 is rotated by driving the shifting motor 46, and ball screw 52 is rotated by way of the rotation transmitting member 50. Due to the rotation of the ball screw 52, the ball nut 54 is moved in the axial direction of the ball screw 52 thus rotating the transmitting lever 56 and hence, the shaft shift 4 and the striker 6 are rotated whereby the shifting operation of the transmission 21 is performed. The shift position of the transmission 21 corresponding to the rotation of the striker 6 is detected by the shift sensor 58.

In the motor-driven-type transmission manipulating device according to this embodiment, the ball screw 20 which is rotated by the shift shaft 4 and the selecting motor 16 is arranged in the plane parallel to the mounting surface A for the transmission 21 of the housing 2 and hence, it is possible to minimize a height of the transmission manipulation device in the upward direction from the transmission 21 and, at the same time, it is possible to enhance the mountability of the transmission manipulation device on various vehicles. In this manner, by arranging the shift shaft 4 and the ball screw 20 in the plane parallel to the mounting surface A for the transmission 21, it is possible to mount the selecting motor 16 in a state that the selecting motor 16 is arranged close to the mounting surface A. When the distance between the selecting motor 16 and the mounting surface A is minimized, it is possible to arrange the selecting motor 16 such that a height of the center of the output shaft 18 of the selecting motor 16 from the mounting surface A becomes 1/2 of an outer diameter of a portion of the motor 16 having the largest outer diameter and hence, it is possible to extremely enhance the mountability of the transmission manipulating device on various vehicles.

Further, the flange-shaped projection 6b is mounted on the periphery of the striker 6, and the projection 6b is engaged with the grooves 26a, 38a which are respectively formed in the ball nut 26 which is fitted on the ball screw 20 rotated by the selecting motor 16 and the slide block 38 which has the position thereof detected by the select sensor 40. Accordingly, it is possible to make the whole motor-driven-type transmission manipulating device compact. Here, the constitution which allows the connecting member (nut) to move in the axial direction by rotating the shaft using the selecting motor 16 and the shifting motor 46 is not limited to the use of the ball screw and may include the use of the combination of usual screw shaft and nut having trapezoidal threads.

## Claims

1. A motor-driven-type transmission manipulating device comprising: a shift shaft which is rotatably supported in the inside of a housing; a striker which is fitted on the shift shaft movably in the axial direction of the shift shaft; a screw shaft which is arranged parallel to the shift shaft and is rotated by the driving of a selecting motor; and a connecting member which is threadedly mounted on the screw shaft and is engaged with the striker so as to be integrally movable with the striker in the axial direction, wherein by moving the connecting member in the axial direction by rotating the screw shaft due to the driving of the selecting motor, the striker is moved in the axial direction so as to perform the selecting operation of a transmission, wherein the improvement is **characterized in that** the shift shaft and the screw shaft are arranged in a plane parallel to a mounting surface for the transmission of the housing.

2. A motor-driven-type transmission manipulating device according to claim 1, wherein the shift shaft and the striker are engaged with each other by the spline engagement.

3. A motor-driven-type transmission manipulating device according to claim 1 or claim 2, wherein the screw shaft which is rotated by the selecting motor is a ball screw and the connecting member is a ball nut.

4. A motor-driven-type transmission manipulating device according to any one of claim 1 to claim 3, wherein a plurality of guide rods are provided parallel to the shift shaft and the screw shaft on a side opposite to the screw shaft with the shift shaft sandwiched between the guide rods and the screw shaft, slide block is axially movably supported on these guide rods and is connected with the striker, and a selecting position of the striker is detected by detecting an axial position of the slide block using a select sensor.

5. A motor-driven-type transmission manipulating device according to claim 4, wherein a flange-shaped projection is formed on an outer periphery of the striker, and the projection is engaged with grooves which are formed on outer surfaces of the connecting member and the slide block respectively whereby these connecting member, striker, and slide block are connected with each other so as to be integrally movable in the axial direction.
